# FASCICULE DE BREVET EUROPEEN

(11) **EP 2 807 047 B1**
(45) Date de publication et mention de la délivrance du brevet: **06.04.2016**
(21) Numéro de dépôt: 13704152.1
(22) Date de dépôt: 11.01.2013
(51) Int. Cl.: B60J 1/02, B60J 10/00, B60J 1/00

(54) **JOINT D'ÉTANCHÉITÉ POUR UNE PARE-BRISE DE VÉHICULE**
DICHTUNG FÜR EINE KFZ-WINDSCHUTZSCHEIBE
SEALING FOR A VEHICLE WINDSCREEN

(30) Priorité: 23.01.2012 FR 1250605
(43) Date de publication de la demande: 03.12.2014
(73) Titulaire: Peugeot Citroën Automobiles SA, 78140 Vélizy Villacoublay (FR)
(72) Inventeur: MARTIN, Pascal, F-25420 Bart (FR)
(74) Mandataire: Fosse, Danièle
(86) Numéro de dépôt international: PCT/FR2013/050071
(87) Numéro de publication internationale: WO 2013/110872

(56) Documents cités:
- EP-A1- 0 691 231
- EP-A2- 0 304 694
- WO-A1-2004/000593
- DE-A1- 19 537 618
- FR-A1- 2 747 076

## Description

L'invention concerne les véhicules, éventuellement automobiles, et plus précisément les planches de bord que comprennent de tels véhicules.

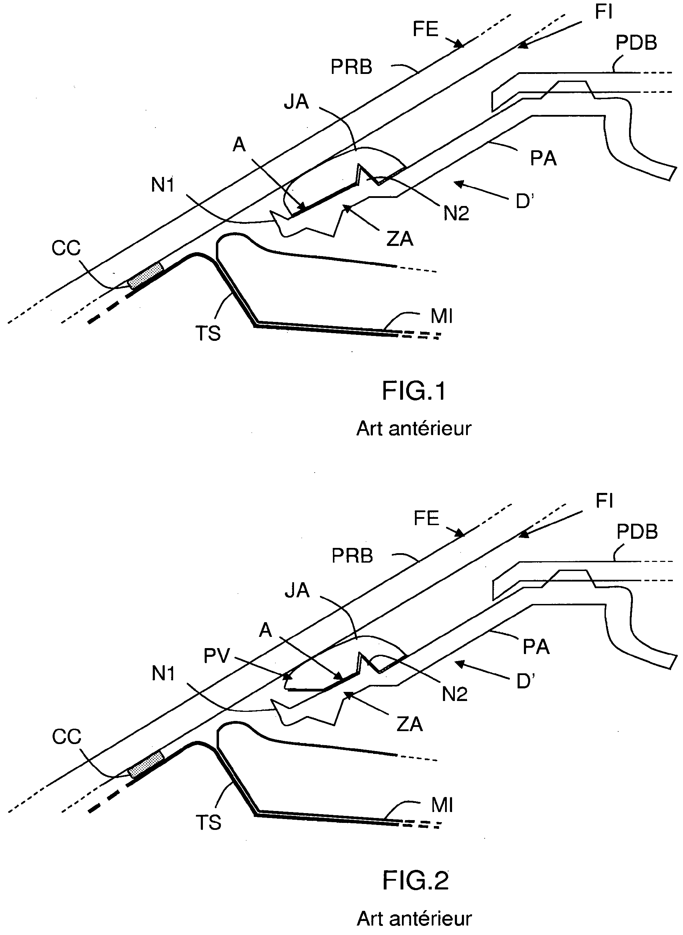

Comme le sait l'homme de l'art, et comme illustré sur les figures 1 et 2 (matérialisant l'art antérieur existant), certains véhicules, généralement de type automobile, comprennent une planche de bord PDB comportant une partie avant munie d'un dispositif antibruit D' destiné à limiter autant que possible la remontée dans l'habitacle de bruits qui sont issus du compartiment avant (où est généralement implanté un moteur). A cet effet, le dispositif antibruit D' comprend une paroi PA munie d'une zone d'accueil ZA sur laquelle est solidarisé, au moyen d'un adhésif A, un joint antibruit JA qui est destiné à être plaqué suivant une direction sensiblement transversale contre la face interne FI du pare-brise PRB du véhicule.

Lorsque la planche de bord est installée dans le véhicule avant le pare-brise, la compression du joint antibruit se fait sensiblement perpendiculairement à la surface d'appui sur la face interne du pare-brise. Par conséquent, cela n'induit pas (ou quasiment pas) de contrainte sur la surface du joint antibruit qui est solidarisée à l'adhésif, si bien qu'il n'y a pas de risque de décollement de la partie avant du joint antibruit de la zone d'accueil, et donc aucun risque que des bruits parasites soient induits localement du fait de décollements/recollements successifs de la partie avant du joint antibruit.

En revanche, et comme illustré sur les figures 1 et 2, lorsque la planche de bord PDB est installée dans le véhicule après le pare-brise PRB (sensiblement suivant la flèche F1), le joint anti-bruit JA entre en contact avec ce dernier (PRB) et se déforme progressivement sans glisser sur le pare-brise PRB du fait que l'adhésif A neuf est suffisamment résistant pour maintenir la partie avant PV du joint antibruit JA sur la zone d'accueil ZA. Hélas, une fois que la planche de bord PDB est en place et donc que le joint antibruit JA est plaqué (ou comprimé) et sous tension contre le pare-brise PRB, l'adhésif A se retrouve sollicité en arrachement du fait du relâchement des contraintes qui se sont accumulées dans la partie avant PV du joint antibruit JA, ce qui provoque assez rapidement le décollement partiel de la partie avant PV du joint antibruit JA. Lorsque le véhicule se déplace cela génère des vibrations qui induisent des (micro-)mouvements du pare-brise PRB et/ou de la planche de bord PDB qui provoquent alternativement le recollage puis le décollage de la partie avant de l'adhésif A (avec la partie avant PV correspondante du joint antibruit JA) de la zone d'accueil ZA, ce qui provoque des bruits parasites audibles qui peuvent être gênants pour les passagers qui sont installés dans l'habitacle du véhicule.

Les documents EP 0 691 231 et DE 19537618 décrivent des dispositifs de ce type.

L'invention a donc pour but d'améliorer la situation.

Elle propose notamment à cet effet un dispositif antibruit du type de celui présenté dans la partie d'introduction et dans lequel la zone d'accueil comprend au moins une rainure sensiblement transversale et propre, en cas de décollement de la zone d'accueil d'une partie avant du joint antibruit avec une partie correspondante de l'adhésif du fait de contraintes induites par le plaquage, à empêcher un recollement partiel ultérieur de cette partie avant décollée en présence de vibrations de la planche de bord et/ou du pare-brise.

Grâce à cette rainure placée au dessous d'une partie de la partie avant décollée, la partie de l'adhésif qui se trouve placée sous cette dernière ne dispose plus, localement, de surface d'appui et donc ne peut pas se recoller sur la zone d'accueil.

Le dispositif antibruit selon l'invention peut comporter d'autres caractéristiques qui peuvent être prises séparément ou en combinaison, et notamment :
- la rainure peut être définie dans une partie intermédiaire de la zone d'accueil ;
   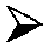 la partie intermédiaire de la zone d'accueil peut être située dans une moitié avant de cette dernière ;
- la paroi peut comprendre deux nervures sensiblement transversales et délimitant la zone d'accueil.

L'invention propose également une planche de bord destinée à équiper un véhicule et comprenant une partie avant munie d'un dispositif antibruit du type de celui présenté ci-avant.

L'invention propose également un véhicule, éventuellement de type automobile, et comprenant une planche de bord du type de celle présentée ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe, une partie d'un pare-brise de véhicule et une partie d'une planche de bord, équipée d'un dispositif antibruit de l'art antérieur et en cours d'installation dans le véhicule,
- la figure 2 illustre schématiquement, dans une vue en coupe, la partie de pare-brise de la figure 1 et la partie de planche de bord installée au voisinage du pare-brise,
- la figure 3 illustre schématiquement, dans une vue en coupe, une partie d'un pare-brise de véhicule et une partie d'une planche de bord, équipée d'un exemple de réalisation d'un dispositif antibruit selon l'invention et en cours d'installation dans le véhicule,
- la figure 4 illustre schématiquement, dans une vue en coupe, la partie de pare-brise de la figure 3 et la partie de planche de bord installée au voisinage du pare-brise.

Les dessins annexés pourront non seulement servir à compléter l'invention, mais aussi contribuer à sa définition, le cas échéant.

L'invention a pour but de proposer un dispositif antibruit D destiné à faire partie d'une partie avant d'une planche de bord PDB d'un véhicule.

Dans ce qui suit, on considère, à titre d'exemple non limitatif, que le véhicule est de type automobile. Il s'agit, par exemple, d'une voiture. Mais l'invention n'est pas limitée à ce type de véhicule. Elle concerne en effet tout type de véhicule comprenant au moins un pare-brise PRB et une planche de bord PDB installés à proximité l'un de l'autre. Ainsi, l'invention concerne également, et notamment, les camions, les véhicules utilitaires, les cars, les bus, les engins de chantier, et certaines cabines de conduite de train, de tramway ou de bateau.

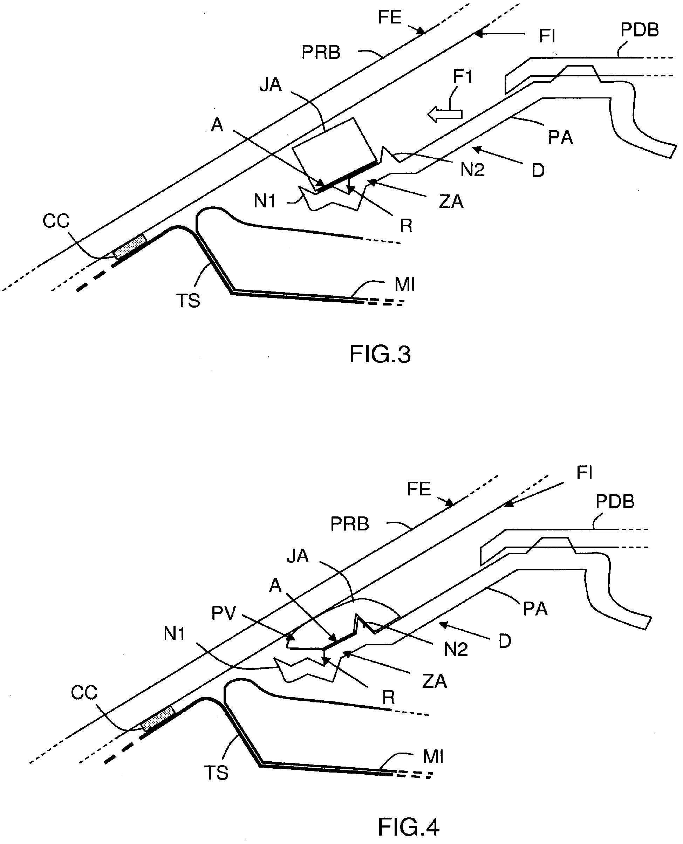

Comme illustré sur les figures 3 et 4, un dispositif antibruit D, selon l'invention, comprend une paroi PA, un joint antibruit JA et un adhésif A.

La paroi PA est solidarisée à (ou fait partie intégrante de) une partie avant d'une planche de bord PDB de véhicule. On entend ici par « partie avant » une partie qui est orientée vers l'avant du véhicule (et donc ici vers le compartiment avant où est généralement implanté au moins un moteur).

Cette planche de bord PDB est installée au dessus de moyens d'insonorisation MI (par exemple en mousse), qui sont eux-mêmes placés sur la partie supérieure d'un tablier TS qui est situé à l'interface entre l'habitacle et le compartiment avant du véhicule et qui est solidarisé à une partie inférieure du pare-brise PRB via un cordon de colle CC déposé sensiblement suivant une direction transversale.

Par définition, la direction transversale est celle qui est perpendiculaire au plan des figures 1 à 4 et sensiblement perpendiculaire aux côtés latéraux du véhicule (où sont installées les portières).

La paroi PA comprend une zone d'accueil ZA destinée à être placée au voisinage immédiat de la face interne FI du pare-brise PRB (dans une partie inférieure).

On entend ici par « face interne » la face qui est orientée vers l'intérieur de l'habitacle et donc opposée à la face externe FE qui est au contact de l'air extérieur.

Cette zone d'accueil ZA s'étend suivant la direction transversale, sensiblement sur toute la largeur de la planche de bord PDB. Elle est destinée à recevoir et supporter le joint antibruit JA avec interposition d'un adhésif (ou analogue) A.

Le joint antibruit JA est destiné à empêcher la remontée dans l'habitacle, via la zone qui est située à l'interface entre le pare-brise PRB et la planche de bord PDB, de bruits qui sont générés dans le compartiment avant du véhicule. A cet effet il peut être réalisé dans une mousse d'isolation phonique.

Comme illustré non limitativement sur les figures 3 et 4, le joint antibruit JA peut-présenter une section transverse sensiblement rectangulaire (éventuellement carrée) et présente une extension suivant la direction transversale qui est sensiblement égale à celle de la zone d'accueil ZA.

Initialement, c'est-à-dire avant que la planche de bord PDB (avec son dispositif antibruit D) ne soit installée dans le véhicule, le joint antibruit JA est solidarisé à la face supérieure de la zone d'accueil ZA au moyen de l'adhésif A. Ce dernier (A) se présente par exemple sous la forme d'un ruban ayant deux faces adhésives opposées. La planche de bord PDB (avec son dispositif antibruit D) est ensuite introduite dans l'habitacle de l'arrière vers l'avant (flèche F1 de la figure 3), puis solidarisée à la structure du véhicule. Lors de la phase finale d'installation le joint antibruit JA entre en contact avec la face interne FI du pare-brise PRB et se déforme progressivement sans glisser sur ce dernier (PRB) du fait que l'adhésif A neuf est initialement suffisamment résistant pour maintenir la partie avant PV du joint antibruit JA sur la zone d'accueil ZA. Puis, lorsque le joint antibruit JA est plaqué (ou comprimé) et sous tension contre le pare-brise PRB, l'adhésif A est sollicité en arrachement du fait du relâchement des contraintes qui se sont accumulées dans la partie avant PV du joint antibruit JA, ce qui provoque assez rapidement le décollement partiel de la partie avant PV du joint antibruit JA (avec la partie avant correspondante de l'adhésif A).

Pour éviter que les vibrations du véhicule ne provoquent des recollements/décollements successifs de cette partie avant PV du joint antibruit JA, l'invention propose, comme illustré non limitativement sur les figures 3 et 4, de définir dans la zone d'accueil ZA au moins une rainure R sensiblement suivant la direction transversale.

Dans l'exemple non limitatif illustré, la zone d'accueil ZA ne comprend qu'une seule rainure R. Mais elle pourrait en comporter au moins deux.

Cette (chaque) rainure R est destinée à remplir une fonction spécifique une fois que la partie avant PV du joint antibruit JA, avec la partie avant correspondante de l'adhésif A, s'est décollée de la surface supérieure de la zone d'accueil ZA du fait des contraintes induites par le plaquage (ou la compression).

Cette fonction spécifique consiste à empêcher le recollement partiel ultérieur de la partie avant décollée PV en présence de vibrations de la planche de bord PDB et/ou du pare-brise PRB. On comprendra en effet qu'en ayant défini une rainure R au dessous d'une partie de la partie avant décollée PV du joint antibruit JA, cette partie avant décollée PV ne dispose plus, localement, de surface d'appui pour se recoller si le déplacement relatif de la planche de bord PDB par rapport au pare-brise PRB est faible.

La largeur de la rainure R est donc choisie en fonction des déplacements relatifs précités qui peuvent raisonnablement survenir dans le véhicule.

On notera que dans l'exemple non limitatif illustré sur les figures 3 et 4 la rainure R présente une section transverse de forme sensiblement triangulaire. Mais, d'autres formes peuvent être envisagées.

On notera également qu'il est avantageux que la paroi PA comprenne deux nervures N1 et N2 sensiblement transversales qui délimitent sa zone d'accueil ZA. Cela permet en effet non seulement de bien positionner le joint antibruit JA, mais également de caler ce dernier (JA) pour qu'il ne bouge pas lorsqu'il est plaqué (ou comprimé) contre la face interne FI du pare-brise PRB lors de la phase d'installation de la planche de bord PDB.

De préférence, et comme illustré sur les figures 3 et 4, la rainure R est définie dans une partie intermédiaire de la zone d'accueil ZA, c'est-à-dire, ici, entre les deux nervures N1 et N2. Mais la rainure R pourrait être située au voisinage immédiat de la nervure N1 qui est la plus basse. En fait, le positionnement de la rainure R dépend principalement de l'endroit où l'on sait (par étude ou retour d'expérience) où est située la zone d'interface entre la partie avant décollée PV et la partie arrière collée du joint antibruit JA.

Dans l'exemple illustré, cette partie intermédiaire de la zone d'accueil ZA est située dans la moitié avant de cette dernière (ZA). La moitié arrière de la zone d'accueil ZA étant la partie dans laquelle la partie arrière du joint antibruit JA demeure collée de façon permanente.

Il est également important de noter que l'aménagement particulier de la zone d'accueil ZA ne nuit pas au cas où la planche de bord PDB est installée dans le véhicule avant le pare-brise PRB. En effet, dans ce cas la compression du joint antibruit JA se fait sensiblement perpendiculairement à la surface d'appui sur la face interne FI du pare-brise PRB, et donc cela n'induit pas (ou quasiment pas) de contrainte sur la surface du joint antibruit JA qui est solidarisée à l'adhésif A, malgré la perte de surface d'appui résultant de la présence de la rainure R, si bien que ledit joint antibruit JA ne risque pas de se décoller.

L'invention ne se limite pas aux modes de réalisation de dispositif antibruit, de planche de bord et de véhicule décrits ci-avant, seulement à titre d'exemple, mais elle englobe toutes les variantes que pourra envisager l'homme de l'art dans le cadre des revendications ci-après.

## Revendications

1. Dispositif antibruit (D) pour une partie avant de planche de bord (PDB) de véhicule, ledit dispositif (D) comprenant une paroi (PA) munie d'une zone d'accueil (ZA) sur laquelle est solidarisé, au moyen d'un adhésif (A), un joint antibruit (JA) destiné à être plaqué suivant une direction sensiblement transversale contre une face interne (FI) d'un pare-brise (PRB) dudit véhicule, **caractérisé en ce que** ladite zone d'accueil (ZA) comprend au moins une rainure (R) sensiblement transversale et propre, en cas de décollement de ladite zone d'accueil (ZA) d'une partie avant (PV) dudit joint antibruit (JA) avec une partie correspondante dudit adhésif (A) du fait de contraintes induites par le plaquage, à empêcher un recollement partiel ultérieur de cette partie avant décollée (PV) en présence de vibrations de ladite planche de bord (PDB) et/ou dudit pare-brise (PRB).

2. Dispositif selon la revendication 1, **caractérisé en ce que** ladite rainure (R) est définie dans une partie intermédiaire de ladite zone d'accueil (ZA).

3. Dispositif selon la revendication 2, **caractérisé en ce que** ladite partie intermédiaire de la zone d'accueil (ZA) est située dans une moitié avant de cette dernière (ZA).

4. Dispositif selon l'une des revendications 1 à 3, **caractérisé en ce que** ladite paroi (PA) comprend deux nervures (N1, N2) sensiblement transversales et qui délimitent ladite zone d'accueil (ZA).

5. Planche de bord (PDB) de véhicule, **caractérisée en ce qu'**elle comprend une partie avant munie d'un dispositif antibruit (D) selon l'une des revendications précédentes.

6. Véhicule, **caractérisé en ce qu'**il comprend une planche de bord (PDB) selon la revendication 5.

7. Véhicule selon la revendication 6, **caractérisé en ce qu'**il est de type automobile.

## Patentansprüche

1. Schallschutzvorrichtung (D) für einen vorderen Teil eines Fahrzeugarmaturenbretts (PDB), wobei die Vorrichtung (D) eine Wand (PA) umfasst, die mit einer Aufnahmezone (ZA) versehen ist, auf der mittels eines Klebstoffs (A) eine Schallschutzdichtung (JA) fest befestigt ist, die dazu bestimmt ist, entlang einer im Wesentlichen Querrichtung gegen eine Innenseite (FI) einer Windschutzscheibe (PRB) des Fahrzeugs angedrückt zu sein, **dadurch gekennzeichnet, dass** die Aufnahmezone (ZA) mindestens eine Nut (R) umfasst, die im Wesentlichen quer liegt und geeignet ist, im Fall eines Ablösens der Aufnahmezone (ZA) eines vorderen Teils (PV) der Schallschutzdichtung (JA) mit einem entsprechenden Teil des Klebstoffs (A) aufgrund von Spannungen, die durch das Andrücken eingeführt werden, ein teilweises späteres Wiederankleben dieses abgelösten vorderen Teils (PV) bei Gegenwart von Schwingungen des Armaturenbretts (PDB) und/oder der Windschutzscheibe (PRB) zu verhindern.

2. Vorrichtung nach Anspruch 1, **dadurch gekennzeichnet, dass** die Nut (R) in einem Zwischenteil der Aufnahmezone (ZA) definiert ist.

3. Vorrichtung nach Anspruch 2, **dadurch gekennzeichnet, dass** der Zwischenteil der Aufnahmezone (ZA) in einer vorderen Hälfte dieser Letzteren (ZA) liegt

4. Vorrichtung nach einem der Ansprüche 1 bis 3, **dadurch gekennzeichnet, dass** die Wand (PA) zwei Rippen (N1, N2) umfasst, die im Wesentlichen quer sind und die Aufnahmezone (ZA) abgrenzen.

5. Fahrzeugarmaturenbrett (PDB), **dadurch gekennzeichnet, dass** es einen vorderen Teil umfasst, der mit einer Schallschutzvorrichtung (D) nach einem der vorhergehenden Ansprüche versehen ist.

6. Fahrzeug, **dadurch gekennzeichnet, dass** es ein Armaturenbrett (PDB) nach Anspruch 5 umfasst.

7. Fahrzeug nach Anspruch 6, **dadurch gekennzeichnet, dass** es des Typs Kraftfahrzeug ist.

## Claims

1. A sound-proofing device (D) for a front portion of a dashboard (PDB) of a vehicle, said device (D) including a wall (PA) provided with a receiving area (ZA) on which there is secured, by means of an adhesive (A), a sound-proofing sealing (JA) intended to be pressed in a substantially transverse direction against an inner face (FI) of a windscreen (PRB) of said vehicle, **characterized in that** said receiving area (ZA) includes at least one substantially transverse groove (R) capable, in the event of detachment from the said receiving area (ZA), of a front portion (PV) of said sound-proofing sealing (JA) with a corresponding portion of said adhesive (A) due to stresses induced by the pressing, of preventing a partial subsequent re-adhesion of this detached front portion (PV) in the presence of vibrations of said dashboard (PDB) and/or of said windscreen (PRB).

2. The device according to Claim 1, **characterized in that** said groove (R) is defined in an intermediate portion of said receiving area (ZA).

3. The device according to Claim 2, **characterized in that** said intermediate portion of the receiving area (ZA) is situated in a front half of the latter (ZA).

4. The device according to one of Claims 1 to 3, **characterized in that** said wall (PA) includes two substantially transverse ribs (N1, N2) which delimit said receiving area (ZA).

5. A dashboard (PDB) of a vehicle, **characterized in that** it includes a front portion provided with a sound-proofing device (D) according to one of the preceding claims.

6. A vehicle, **characterized in that** it includes a dashboard (PDB) according to Claim 5.

7. The vehicle according to Claim 6, **characterized in that** it is of the automobile type.
